# EUROPÄISCHE PATENTSCHRIFT

(11) **EP 1 764 249 B1**
(45) Veröffentlichungstag und Bekanntmachung des Hinweises auf die Patenterteilung: **22.05.2013**
(21) Anmeldenummer: 06017413.3
(22) Anmeldetag: 22.08.2006
(51) Int. Cl.: B60J 10/04

(54) **Dichtstrang**
Sealing strip
Joint d'étanchéité

(30) Priorität: 15.09.2005 DE 102005044078
(43) Veröffentlichungstag der Anmeldung: 21.03.2007
(73) Patentinhaber: GM Global Technology Operations LLC, Detroit, MI 48265-3000 (US)
(72) Erfinder: Lange, Marcus, 64319 Pfungstadt (DE)
(74) Vertreter: Strauss, Peter

(56) Entgegenhaltungen:
- DE-B3-102004 003 957
- US-A- 5 791 722
- US-A1- 2003 042 755

## Beschreibung

Die Erfindung betrifft Personenkraftfahrzeuge mit einer rahmenlosen Tür wie Cabriolets und Coupés. Insbesondere betrifft die Erfindung einen Dichtstrang für Türen solcher Fahrzeuge.

Fahrzeuge mit einer beweglichen Dachkonstruktion wie solche mit einem Faltdach oder einem Hardtop-Fahrzeugdach besitzen rahmenlose Vordertüren mit zugehörigen Fallfenstern. Beim Hochfahren des Fallfensters fährt dieses in einen mit einem Dichtstrang ausgestatteten Kanal, den so genannten Dachkanal, der A-Säule ein. Beim Öffnen der Tür fällt das Fenster eine kurze Strecke nach unten, sodass anschließend die Tür nebst Fenster ohne große mechanische Belastung des Dichtstrangs geöffnet werden kann.

Es gibt eine große Vielzahl von Dichtstränge für die vorgenannten rahmenlosen Türen. Nahezu alle besitzen eine im Bereich der A-Säulenaußenseite angeordnete Kosmetiklippe. Die Kosmetiklippe hat zum einen eine ästhetische Funktion, als sie die äußere, meist gebördelte untere Abschlusskante des Dachkanals verbirgt, in den der Dichtstrang eingepasst ist. Andererseits erfüllt die Kosmetiklippe auch eine wichtige Sicherheitsfunktion. Da die besagte Abschlusskante ein äußeres vorstehendes Teil des Kraftfahrzeugs darstellt unterliegt sie den Sicherheitsvorschriften der EU-Ratsdirektive 74/483/EEC vom 17.9.1974. Danach darf die Abschlusskante keinen Radius unter 2, 5 mm aufweisen, was jedoch bei dieser gebördelten Kante regelmäßig der Fall ist. Die Kosmetiklippe umschließt die Abschlusskante und vergrößert so ihren Radius auf zulässige Werte von mehr als 2,5 mm.

Die im vorstehenden Absatz beschriebene Sicherheitsfunktion ist nur dann zuverlässig gewährleistet, wenn die Kosmetiklippe die Abschlusskante tatsächlich umschließt. Erfahrungen zeigen jedoch, dass sich die Kosmetiklippe bei bekannten Dichtsträngen teilweise von der Außenseite der A-Säule lösen und die Abschlusskante freigeben kann wenn das Fallfenster in den Dachkanal einfährt. Dies führt zu einem unbefriedigenden ästhetischen Erscheinungsbild der A-Säule bei nur unzureichend erfüllter Sicherheitsfunktion. Das Dokument DE 102004 003 957 B3 offenbart ein Kraftfahrzeug nach dem Oberbegriff des Anspruchs 1.

Aufbauend auf diesen Stand der Technik ist es die Aufgabe der vorliegenden Erfindung, ein Kraftfahrzeug mit einer ein Fallfenster aufweisenden rahmenlosen Tür und mit einer A-Säule, die einen Dachkanal aufweist, in den ein Dichtstrang eingebaut ist und zwischen dem Fallfenster und dem Dachkanal angeordnet ist, der eine untere Abschlusskante aufweist, bereitzustellen, bei der die Kosmetiklippe die Abschlusskante des Dachkanals zuverlässig und ästhetisch ansprechend umschließt.

Die Lösung dieser Aufgabe erfolgt mit den Merkmalen des unabhängigen Anspruchs. Vorteilhafte Weiterbildungen werden durch die Merkmale der abhängigen Ansprüche wiedergegeben.

Die erfindungsgemäße Lösung sieht vor, die Kosmetiklippe von dem an ihr angrenzenden Teil des Dichtstrangs mechanisch zu entkoppeln. Dieser Ansatz beruht auf der Erkenntnis, dass beim Einfahren des Fallfensters in den Dachkanal zunächst nur von der Kosmetiklippe verschiedene Teile des Dichtstrangs deformiert wirden, hierbei auch den an die Kosmetiklippe angrenzenden Teil, nicht aber die Kosmetiklippe selbst. Erst durch die mechanische Kopplung von Kosmetiklippe und daran angrenzendem Dichtstrangteil kommt es beim Stand der Technik zusätzlich zu einer Krafteinwirkung auf die Kosmetiklippe mit dadurch verursachtem Ablösen des äußeren Endes der Kosmetiklippe von der Außenseite des Dachkanals unter Freigabe der Dachkanalabschlusskante. Die mechanische Entkopplung bedingt somit, dass sich die Deformation der weiteren Dichtstrangteile nicht auf die benachbarte Kosmetiklippe auswirkt. Auf diese Weise wirken keine die Kosmetiklippe deformierenden Kräfte, sodass diese weiterhin die besagte Abschlusskante umschließt. Dies gewährleistet zuverlässig die Einhaltung der im einleitenden Teil beschriebenen Sicherheitsfunktion der Kosmetiklippe und eines einwandfreien optischen Eindrucks dieses Bereichs der A-Säule.

Die mechanische Entkopplung von Kosmetiklippe und angrenzendem Teil kann derart erfolgen, dass der Dichtstrang zweistückig ausgebildet ist. Die Kosmetiklippe und der Rest des Dichtstrangs sind dann separate, in den Dachkanal einzupassende Teile.

Unter Beibehaltung des gegenwärtigen Montageaufwands und der Montagekosten wird bevorzugterweise ein einstückig ausgebildeter Dichtstrang gewählt, bei dem sich zwischen Kosmetiklippe und dem daran angrenzenden Teil des Dichtstrangs ein Schlitz befindet. Hierdurch wird die Kosmetiklippe teilweise vereinzelt und die mechanische Kopplung deutlich herabgesetzt. Breite und Tiefe des Schlitzes sind dann auf die konkrete Geometrie des Dichtstrangs und auf das Material des Dichtstrangs anzupassen. Im Regelfall wird es ausreichend sein, wenn sich der Schlitz bezogen auf die vertikale Richtung nach oben hin bis etwa zur Mitte hin erstreckt. Die Form des Schlitzes kann weitgehend frei gewählt werden und in der Art eines geradlinigen Schnitts gestaltet sein. Der Schlitz kann aber auch V-förmig, zickzackförmig oder wellenförmig gewählt werden.

In einer bevorzugten Ausführungsform der Erfindung ist der an die Kosmetiklippe angrenzende Teil des Dichtstrangs eine Hohlkammer. Diese Ausbildung ist für die Dichtstränge von Coupés gängig und weist den Vorteil einer Geräuschreduzierung bei geschlossenem Dach auf.

In einer bevorzugten Ausführungsform der Erfindung besteht der Dichtstrang aus einem Elastomer wie beispielsweise Ethylen-Propylen-Dien-Kautschuk (EPDM). Hierbei kann das Elastomer in dem mit dem Fallfenster in Berührung kommenden Bereich der Hohlkammerumwandung weicher ausgebildet sein als in den restlichen Bereichen des Dichtstrangs. Beispielsweise kann der Dichtstrang in diesem Bereich aus Moosgummi gefertigt sein. Dies führt dazu, dass das weichere Moosgummi stärker deformiert und die Kosmetiklippe als Folge dessen weniger stark deformiert wird. In Kombination mit einem Schlitz zwischen Kosmetiklippe und Hohlkammer stellt sich bei einem einstückigem Dichtstrang der weitere Vorteil ein, dass zur Gewährleitung der mechanischen Entkopplung der Schlitz kleiner bzw. weniger tief gewählt werden kann. Dies verleiht dem Dichtstrang als Ganzes eine erhöhte Festigkeit und mindert die Gefahr, dass die Kosmetiklippe beim Einpassen des Dichtstrangs in den Dachkanal beschädigt oder gar abgerissen wird.

In einer bevorzugten Ausführungsform weist die Kosmetiklippe eine von der Hohlkammer weg gerichtete Vorspannung auf. Ist der Dichtstrang in den Dachkanal eingepasst, so führt die Vorspannung dazu, dass die Kosmetiklippe die Abschlusskante des Dachkanals fester umschmiegt und sich bei einer verbleibenden mechanischen Kopplung zwischen Hohlkammer und Kosmetiklippe nur schwerer von der Außenseite der A-Säule lösen lässt.

In einer weiteren Ausführungsform kann vorgesehen sein, dass das Elastomer zumindest im Bereich der teilweise umschlossenen Außenseite der A-Säule eine Härte im Bereich von etwa 55 Shore A bis etwa 65 Shore A, und insbesondere von 60 Shore A aufweist. Hierdurch wird die Einhaltung der im einleitenden Teil der Anmeldung zitierten EU-Direktive erleichtert, da dann der Kantenradius auch kleiner als 2,5 mm sein darf.

Weitere Merkmale und Vorteile der Erfindung werden aus der folgenden detaillierten Beschreibung mit Bezug auf die beigefügten Zeichnungen erkennbar die nachfolgend als nicht beschränkende Beispiele gegeben sind. Es stellt dar:
- Fig. 1: eine schematische perspektivische Seitenansicht einer Cabrioletkarosserie,
- Fig. 2: den Dichtstrang in einer perspektivischen Seitenansicht,
- Fig. 3: den Dichtstrang mit Dachkanal in einer schematischen Seitenansicht, hierbei die Vorspannung der Kosmetiklippe veranschaulichend,
- Fig. 4: in einer schematischen Seitenansicht den im Dachkanal eingebauten Dichtstrang ohne eingefahrenes Fallfenster,
- Fig. 5: in einer schematischen Seitenansicht den im Dachkanal eingebauten Dichtstrang mit eingefahrenem Fallfenster,

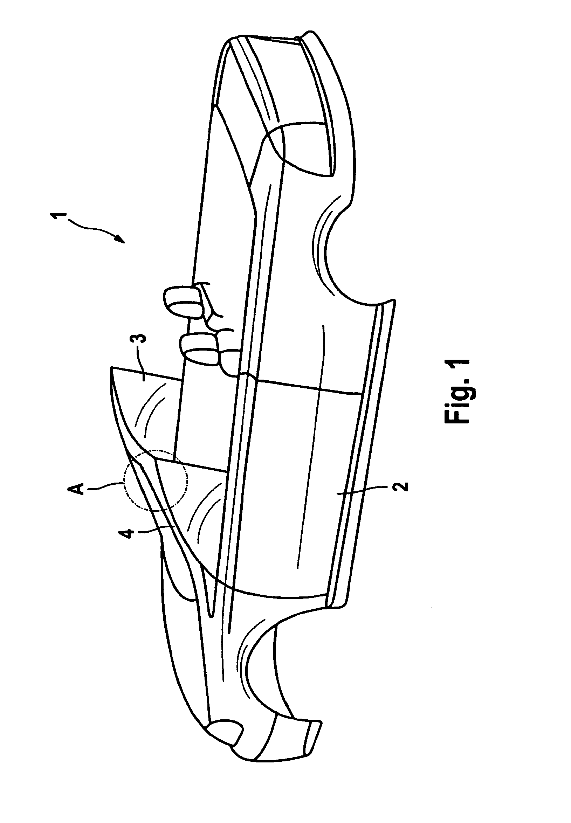

Fig. 1 zeigt die Karosserie eines Cabriolets 1 und einer Tür 2 mit Fallfenster 3. Das obere Ende des Fallfensters 3 ist im

Bereich A in den (nicht dargestellten) Dachkanal der A-Säule 4 eingefahren.

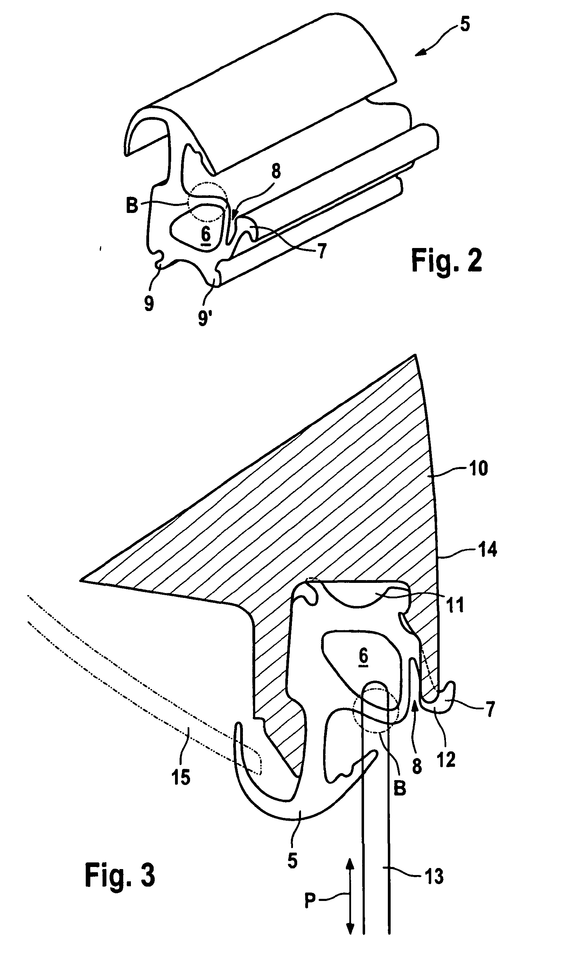

Fig. 2 zeigt den Dichtstrang 5 gemäß der vorliegenden Erfindung. Er ist einstückig ausgebildet und besteht bis auf den Bereich B aus EPDM. Im Bereich B besteht der Dichtstrang 5 aus im Vergleich zu EPDM weicherem Moosgummi. Zwischen der Hohlkammer 6 und der Kosmetiklippe 7 befindet sich ein Schlitz 8. Mit Hilfe der Befestigungselemente 9 und 9' wird der Dichtstrang 5 in den Dachkanal eingeklemmt. Im endseitigen Teil der Kosmetiklippe 7 besitzt diese eine Härte von 60 Shore A.

Fig. 3 zeigt den Dichtstrang 5 mit der im wesentlichen U-förmigen Aussparung 11 des Dachkanals 10 des Cabriolets 1 mit Innenverkleidung 15. Hierbei ist Fig. 3 nicht so zu verstehen, als ob der Dichtstrang 5 in den Dachkanal 10 eingepasst wäre. Vielmehr ist, um die mechanische Entkopplung des Hohlkammerbereichs 6 von der Kosmetiklippe 7 zu veranschaulichen, die Kosmetiklippe 7 so gezeichnet, als ob die äußere Abschlusskante 12 des Dachkanals 10 nicht vorhanden wäre. Dadurch wird der vorhandene Schlitz 8 sichtbar. Der Schlitz 8 ist im wesentlichen keilförmig und erstreckt sich bezogen auf die Vertikale bis etwa zur Mitte der Hohlkammer 6.

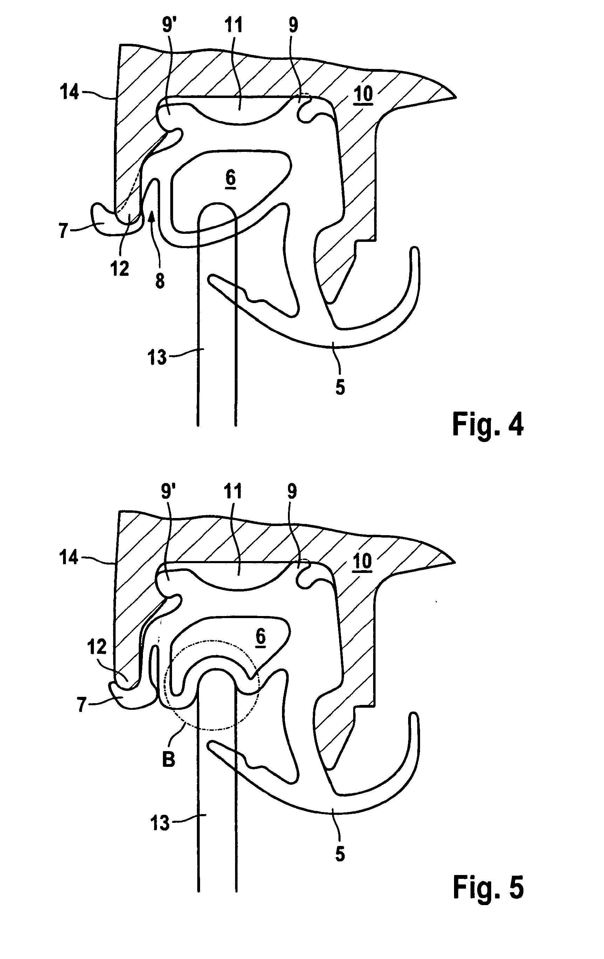

Weiterhin zeigt die Darstellung, dass die Kosmetiklippe 7 eine seitlich nach rechts und damit von der Hohlkammer 6 weg gerichtete Vorspannung aufweist. Diese sorgt dafür, dass die Kosmetiklippe 7 im tatsächlich im Dachkanal 10 eingepassten Zustand, vgl. hierzu den Detailausschnitt der Fig. 4, die Außenseite 14 des Dachkanals 10 teilweise umschließt und dadurch die Abschlusskante 12 verbirgt. Hierdurch wird zum einen die Dichtfunktion der Kosmetiklippe 7 gewährleistet, und wird zum anderen deren Ablösen von der Abschlusskante 12 erschwert.

Das Fallfenster 13 ist in vertikaler Richtung beweglich was durch den Doppelpfeil P angedeutet wird. Beim Schließen des Fensters bewegt sich dieses nach oben, wodurch der Bereich B der Umwandung der Hohlkammer 6 deformiert wird.

Fig. 5 korrespondiert zu Fig. 4 und veranschaulicht die Deformationen durch das in den Bereich B der Hohlkammer 6 eingefahrene Fallfensters 13. Man erkennt, dass die Kosmetiklippe 7 keine Deformation erfahren hat und die Abschlusskante 12 des Dachkanals 10 weiterhin zuverlässig verbirgt.

### Bezugszeichenliste

| | |
|---|---|
| 01 | Cabriolet |
| 02 | Tür |
| 03 | Fallfenster |
| 04 | A-Säule |
| 05 | Dichtstrang |
| 06 | Hohlkammer |
| 07 | Kosmetiklippe |
| 08 | Schlitz |
| 09 | Befestigungselement |
| 09' | Befestigungselement |
| 10 | Dachkanal |
| 11 | Aussparung |
| 12 | Abschlusskante |
| 13 | Fallfenster |
| 14 | Außenseite des Dachkanals |
| 15 | Verkleidung des Fahrzeuginnenraums |
| | |
| A | Bereich |
| B | Bereich |
| P | Pfeil |

## Patentansprüche

1. Kraftfahrzeug (1) mit einer ein Fallfenster (13) aufweisenden rahmenlosen Tür (2) und mit einer A-Säule (4), die einen Dachkanal (10) aufweist, in den ein Dichtstrang (5) eingebaut ist, der eine Kosmetiklippe aufweist und zwischen dem Fallfenster (13) und dem Dachkanal (10) angeordnet ist, der eine untere Abschlusskante (12) aufweist, die mit der Kosmetiklippe (7) umschlossen ist, **dadurch gekennzeichnet, dass** die Kosmetiklippe (7) von dem an ihr angrenzenden Teil (6) des Dichtstrangs (5) mechanisch entkoppelt ist, so dass sie durch das Einfahren des Fallfensters (13) in den Dachkanal (10) im wesentlichen nicht deformiert wird.

2. Kraftfahrzeug nach Anspruch 1, **dadurch gekennzeichnet, dass** der Dichtstrang (5) zweistückig ausgebildet ist, mit einem ersten Teil in Gestalt der Kosmetiklippe (7) und einem zweiten Teil, umfassend den an die Kosmetiklippe (7) angrenzenden Teil.

3. Kraftfahrzeug nach Anspruch 1, **dadurch gekennzeichnet, dass** der Dichtstrang (5) einstückig ausgebildet ist, und sich zwischen der Kosmetiklippe (7) und dem daran angrenzenden Teil ein Schlitz (8) befindet.

4. Kraftfahrzeug nach einem der Ansprüche 1 - 3, **dadurch gekennzeichnet, dass** die Kosmetiklippe (7) eine vom dem daran angrenzenden Teil des Dichtstrangs (5) weggerichtete Vorspannung aufweist.

5. Kraftfahrzeug nach einem der Ansprüche 1 - 4, **dadurch gekennzeichnet, dass** der an die Kosmetiklippe (7) angrenzende Teil des Dichtstrangs (5) eine Hohlkammer (6) ist.

6. Kraftfahrzeug nach einem der Ansprüche 1 - 5, **dadurch gekennzeichnet, dass** der Dichtstrang (5) aus einem Elastomer besteht.

7. Kraftfahrzeug nach Anspruch 6, **dadurch gekennzeichnet, dass** das Elastomer in dem mit dem Fallfenster (13) in Berührung kommenden Bereich der Hohlkammerumwandung weicher ist, als in den restlichen Bereichen des Dichtstrangs (5).

8. Kraftfahrzeug nach Anspruch 6 oder 7, **dadurch gekennzeichnet, dass** das Elastomer zumindest im Bereich der teilweise umschlossenen Abschlusskante (12) des Dachkanals (10) eine Härte im Bereich von etwa 55 Shore A bis etwa 65 Shore A aufweist.

9. Kraftfahrzeug nach einem der Ansprüche 1 - 8, **dadurch gekennzeichnet**, das Kraftfahrzeug als Personenkraftfahrzeug, insbesondere als Cabriolet oder Coupe ausgebildet ist.

## Claims

1. A motor vehicle (1), comprising a frameless door (2) with a drop window (13) and an A-column (4) having a roof channel (10) in which a sealing strip (5) comprising a cosmetic lip is installed and is arranged between the drop window (13) and the roof channel (10), which comprises a bottom border (12) which is enclosed by the cosmetic lip (7), **characterized in that** the cosmetic lip (7) is mechanically decoupled from the portion (6) of the sealing strip (5) which is adjacent thereto, so that it is substantially not deformed by the retraction of the drop window (13) into the roof channel (10).

2. A motor vehicle according to claim 1, **characterized in that** the sealing strip (5) is arranged in two parts, with a first part in form of the cosmetic lip (7) and a second part comprising the part adjacent the cosmetic lip (7).

3. A motor vehicle according to claim 1, **characterized in that** the sealing strip (5) is integrally arranged and a slit (8) is arranged between the cosmetic lip (7) and the part adjacent thereto.

4. A motor vehicle according to one of the claims 1 to 3, **characterized in that** the cosmetic lip (7) has a pretension which faces away from the part of the sealing strip (5) which is adjacent thereto.

5. A motor vehicle according to one of the claims 1 to 4, **characterized in that** the part of the sealing strip (5) which is adjacent to the cosmetic lip (7) is a hollow chamber (6).

6. A motor vehicle according to one of the claims 1 to 5, **characterized in that** the sealing strip (5) consists of an elastomer.

7. A motor vehicle according to claim 6, **characterized in that** the elastomer is softer in the region of the hollow chamber wall which is in contact with the drop window (13) than in the remaining regions of the sealing strip (5).

8. A motor vehicle according to claim 6 or 7, **characterized in that** the elastomer has a hardness in the range of approx. 55 Shore A to approx. 65 Shore A at least in the region of the partly enclosed border (12) of the roof channel (10).

9. A motor vehicle according to one of the claims 1 to 8, **characterized in that** the motor vehicle is arranged as a passenger car, especially a convertible or coupé.

## Revendications

1. Véhicule à moteur (1) avec une porte (2) sans cadre présentant une fenêtre à vitre coulissante (13) et avec un montant A (4) présentant un canal de toit (10) dans lequel est monté un bourrelet d'étanchéité (5) qui présente une lèvre décorative, disposé entre la fenêtre à vitre coulissante (13) et le canal de toit (10), qui présente un bord de fermeture inférieur (12) entouré de la lèvre décorative (7), **caractérisé en ce que** la lèvre décorative (7) est découplée mécaniquement de la partie (6) du bourrelet d'étanchéité (5) qui lui est contiguë, de sorte qu'elle n'est pour l'essentiel pas déformée par la pénétration de la fenêtre à vitre coulissante (13) dans le canal de toit (10).

2. Véhicule à moteur selon la revendication 1, **caractérisé en ce que** le bourrelet d'étanchéité (5) est construit en deux parties, avec une première partie formée par la lèvre décorative (7) et une deuxième partie comprenant la partie contiguë à la lèvre décorative (7).

3. Véhicule à moteur selon la revendication 1, **caractérisé en ce que** le bourrelet d'étanchéité (5) est construit d'une pièce et une fente (8) se trouve entre la lèvre décorative (7) et la partie qui lui est contiguë.

4. Véhicule à moteur selon l'une des revendications 1 à 3, **caractérisé en ce que** la lèvre décorative (7) présente une précontrainte dirigée à l'opposé de la partie du bourrelet d'étanchéité (5) qui lui est contiguë.

5. Véhicule à moteur selon l'une des revendications 1 à 4, caractérisé en que la partie du bourrelet d'étanchéité (5) contiguë à la lèvre décorative (7) est un compartiment creux (6).

6. Véhicule à moteur selon l'une des revendications 1 à 5, **caractérisé en ce que** le bourrelet d'étanchéité (5) se compose d'un élastomère.

7. Véhicule à moteur selon la revendication 6, **caractérisé en ce que** l'élastomère est plus souple dans la zone de la paroi du compartiment creux venant en contact avec la fenêtre à vitre coulissante (13) que dans les autres parties du bourrelet d'étanchéité (5).

8. Véhicule à moteur selon la revendication 6 ou 7, **caractérisé en ce que** l'élastomère présente, au moins dans la zone du bord de fermeture (12) partiellement entouré du canal de toit (10), une dureté Shore A comprise entre environ 55 et environ 65.

9. Véhicule à moteur selon l'une des revendications 1 à 8, **caractérisé en ce que** le véhicule à moteur est construit comme un véhicule personnel, en particulier un cabriolet ou un coupé.
